Europäisches Patentamt

European Patent Office

Office européen des brevets

(19)

(11) **EP 0 510 135 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(21) Anmeldenummer: **91918289.9**

(22) Anmeldetag: **02.10.1991**

(51) Int. Cl.$^6$: **A01G 25/02**, B29C 47/02

(86) Internationale Anmeldenummer:
**PCT/GR91/00012**

(87) Internationale Veröffentlichungsnummer:
**WO 92/05689 (16.04.1992 Gazette 1992/09)**

(54) **BEWÄSSERUNGSROHR MIT INNENGESCHWEISSTEN TROPFELEMENTEN UND METHODE ZU SEINER HERSTELLUNG**

IRRIGATION PIPE WITH DRIPPING ELEMENTS SOLDERED TO ITS INNER SIDE AND PROCESS FOR PRODUCING THE SAME

TUYAU D'IRRIGATION A ELEMENTS D'EGOUTTAGE SOUDES A SON INTERIEUR ET SON PROCEDE DE FABRICATION

(84) Benannte Vertragsstaaten:
**ES FR IT**

(30) Priorität: **03.10.1990 GR 90010072**

(43) Veröffentlichungstag der Anmeldung:
**28.10.1992 Patentblatt 1992/44**

(73) Patentinhaber:
**DERMITZAKIS, Emmanuil**
**GR-115 25 Athens (GR)**

(72) Erfinder: **DERMITZAKIS, Emmanuil**
**GR-115 25 Athens (GR)**

(56) Entgegenhaltungen:
EP-A- 0 344 605          AU-B- 484 446
GB-A- 2 057 960          US-A- 4 366 926
US-A- 4 817 875

**Beschreibung**

Die Erfindung betrifft ein Verfahren zur Herstellung von einem Tropfbewässerungsrohr mit konstantem oder variablem Querschnitt gemäß Anspruch 1 und ein Tropfbewaesserungsrohr mit variablem Querschnitt gemäß Anspruch 7. Das Rohr weist innen und in bestimmten Abstaenden, geschweissten Tropfelementen auf. Es handelt sich um ein Kunststoffrohr kontinuirlicher Form, welches aber keine konstante Querschnittsflaeche ueber seine ganze Laenge besitzt.

Diese Querschnittsform entsteht dadurch, dass die Tropfelement an die innere Rohrwand gepresst werden, wobei eine ausgepraegte, oertliche Schwellung (Ausbauchung) sich bildet. Der Endquerschnitt des Bewaesserungsrohres ist frei, und weist den hydraulischen Widerstand eines glatten Rohres auf. Solche Rohre werden als Tropfverteiler zur Bewaesserung benutzt. Dieses Bewaesserungsrohr traegt in bestimmeten Abstaenden Oeffnungen, die den Tropfelementen entsprechen, aus denen das Wasser tropfenweise fliesst, und es wird normalerweise gemeinsam mit mehreren anderen, von einem groesseren Verteilungsrohr mit Wasser gespeist. Die Abstaende der Wasseraustrittsoeffnungen, sind je nach der Kulturart und Bodenbeschaffenheit, bestimmt.

EP-A-0 344 605 beschreibt ein Verfahren zur Herstellung eines Rohres zur Tropfbewässerung sowie das Rohr, wo das Tropfelement auf einer starren, horizontalen Führungsstange, die sich im inneren des Rohres befindet, mit einem Vorschubsmechanismus beschleunigt wird. Die Breite der Schlitze zwischen Führungsstange und Rohr innenwand ist konstant wärend des Schweissverganges.

Tropfbewaesserungsrohre kontinuirlicher Form, mit einzelnen, innengeschweissten Tropfelementen, sind bekannt:

-    Eine Art davon hat zylindrisches Tropfelement, welches auf der Zylinderoberflaeche eine gepraegte Meanderform traegt, die den Druckabfall, beziehungsweise die Tropfmenge des Tropfelementes bestimmt. Dieses Tropfelement traegt auf der Zylinderinnenseite einen angeschweissten druckkompensierenden Koerper 35 (Bilder 1, und 2), welcher fuer eine konstante Tropfmenge innerhalb eines bestimmten Druckbereiches sorgt.

-    Eine andere Art benutzt erheblich kleinere Tropfelemente b.z.w. druckkompensierende Koerper 35 (Bilder 3, und 4), die direkt an der Innenseite eines kontinuirlichen normalen Rohres mit symmetrischem Querschnitt haengend angeschweisst sind. Das Druckkompensieren geschieht mit Hilfe einer flachen Membran, die fuer konstante Wassertropfmenge innerhalb eines bestimmten Druckbereiches sorgt.

-    Eine andere Art benutzt Tropfelemente, die die Form eines halben Zylinders haben, die aber einen erheblichen Umfangteil der inneren Rohroberflaeche benoetigen, woran sie angeschweisst sind. Auch diese Art benutzt einen druckkompensierenden Koerper mit flacher Membran, welcher auch haengend angeschweisst ist.

Bei allen diesen Tropfbewaesserungsrohren. deren Tropfelemente Zylinder sind, oder zylindrische Beruehrungsflaeche haben, werden die Tropfelemente innerhalb eines Rohres mit konstantem und symmetrischem Querschnitt waehrend der Rohrproduktionsphase eingefuehrt.

-    Ausser diesen Tropfbewaesserungsrohren, gibt es eine grosse Anzahl von individuellen Tropfelementen, die eine einfache Meanderform fuer den Druckabfall. b.z.w. verschiedene Methoden fuer das druckkompensieren (Bilder 7, 8, 9) anwenden. Alle diese individuellen Tropfelemente werden an die aeussere Oberflaeche des Rohres, mittels einer Bohrung aus dem Rohr, die nach der Rohrproduktion geoeffnet wird, und mit Hilfe eines kleineren zerbrechlichen Roehrchenansatzes 7, der es auf dem Tropfelement gibt, befestigt. Alle diese vorher erwaehnte Tropfbewaesserungsarten haben gewisse Nachteile:

1) Bei der Tropfbewaesserungsart (Bilder 1, und 2) mit den zylindrischen Tropfelementen, ist grosse Materialverschwendung restzustellen. Besonders ihre druckkompensierende Version, wobei nach dem Zusatz des druckkompensierenden Koerpers 35, der ganze zylindrischer Teil nicht ausgenutzt wird. Ausserdem der innere Druck im Rohr versucht das Tropfelement abzukleben.

2) Bei der Tropfbewaesserungsart (Bilder 3 und 4), sind die Dimensionen des Tropfelementes verhaeltnissmaessig klein. Aber wegen der Tatsache, dass ihr Tropfelement an die innere Oberflaeche eines Rohres mit ueberall konstantem Querschnitt geschweisst wird, bleibt dieses Tropfelement haengend innerhalb des Rohres, welches den wirkasamen Rohrquerschnitt. der fuer den Wasserdurchlauf noetig ist, an der Schweisstelle erheblich beeintraechtigt, waehrend gleichzeitig ein grosser hydraulischer Widerstand und ein ungewollter Druckabfall des Wassers laengs des Rohres hervorgerufen wird. In folgedessen sind die Tropfraten des ersten und des letzten Tropfelementes des Tropfrohrstranges sehr unterschiedlich. Auf diese Weise wird die "maximal moegliche einsetzbare Laenge" des Tropfrohrstranges begrenzt. Die maximal moegliche einsetzbare Laenge ist die Laenge des Stranges, bei welcher sein erstes und letztes Tropfelement eine Wasserratendifferenz ≤10% aufweisen. Dieser Nachteil b.z.w dieses Verhalten ist praegend, und charakterisiert jede Tropfbewaesserungsrohrart, besonders diejenigen von ihnen, die keine Druckkompensation besitzen. Aber auch in dem Fall, wenn naemlich das Tropfbewaesserungsrohr ueber eine Druckkompensation verfuegt, und so, bis zu einer gewissen Grenze, die dabei entstehenden Druckdifferenzen ausgleichen kann, so dass die Tropfwasserraten ueber die ganze Laenge konstant (Bild 31) bleiben, muessen wir den Arbeitsdruck des ganzen Bewaesserungssystems stark (erheblich) erhoehen, was mit einem groesseren Energieverbrauch fuer die Wasserpumpen, sowie mit einer kleineren Lebensdauer der ganze Anlage (z.B. Pumpenstation, Zentralfiltrierungssystem, Verbindungselemente, Rohre, u.s.w.) verbunden ist.

Um ein Groessenordnungsmass der Rohrquerschnittsverminderung wegen dieses haengend angeschweissten Tropfelementes (Bilder 3, und 4) zu bekommen, benuetzen wir Beispiele. Wir beziehen uns besonders auf diejenigen Tropfelemente, dessen Aussendimensionen wegen des zusaetzlichen druckkompensierenden Teils (z.B. die Addition einer Membran), erheblich vergroessert werden.

Aus einer von uns durchgefuehrte genauen Marktforschung, ergibt sich, dass das kleinste, die Dimensionen betreffendes, druckkompensierendes Tropfelement, einen Querschnitt von: Hoehe 6mm x Breite 5,5mm = 32mm2 aufweist, waehrend das groesste, einen Querschnitt von: Hoehe 6mm x Breite 11mm = 66mm2 aufweist. (Die Laenge aller Tropfelemente dieser Art liegt zwischen 30-45mm).

Sobald diese Tropfelemente an die innere Oberflaeche eines Rohres mit Aussendurchmesser Φ16mm und Rohrdicke 1mm, d.h. mit einem freien inneren Querschnitt von 154mm2 geschweisst werden, wird der wirksame Querschnitt des Rohres in der Groessenordnung von 21,4% bis

$$( \frac{33 \, mm^2}{154 \, mm^2} )$$

42,8%

$$( \frac{66 \, mm^2}{154 \, mm^2} )$$

vermindert!!. Zu dieser Verminderung, muessen auch die hydraulische Formwiderstaende des Tropfelementes selbst dazu addiert werden. Beispielshalber, betrachten wir von den beiden dasjenige Tropfbewaesseungsrohr, welches die groesste Querschnittsverminderung aufweist. Dazu nehmen wir an, dass die Tropfrate pro Tropfelement 3,5lit/H, der Tropfelementenabstand gleich 0,30m, und die Gesamtlaenge des Tropfrohrstranges 100m betraegt. D.h. dass der ganze Strang 330 Tropfelemente ingesammt besitzt.

Aus Berechnungen, Experimenten, oder Firmenanwendungsunterlagen, haetten wir einen Druckunterschied zwischen dem ersten und dem letzten Tropfelement des betrachtenden 100m Stranges, der Groessenordnung von 40 MWS (Meter Wassersaeule). Oder anders ausgedrueckt, der Tropfrohrstrang weist ueber diese Laenge einen Druckabfall gleich 40MWS auf. Wenn wir aber annehmen, dass das Tropfelement die Charakteristik des Bildes 31 hat, muessen wir zugeben, dass der 100m lange Tropfrohrstrang, sofern es die Tropfratenhomohenitaet betrifft, sich gut verhalten muesste. Aber, der Druck am Amfang des Stranges, haette anstatt nur auf 15m WS, auf 40MWS ansteigen muessen. Dieser Druck von 15 mWS, gibt allgemein als der wirtschaftlichster Betriebsdruck fuer Tropfelemente sowie Wasserverteiler. Wir haetten also fuer das ganze Bewaesserungssystem, ein Ueberschreiten des Betriebsdruckes der Groessenordnung von 25m WS mit dem dazugehoerten groesseren Energieverbrauch, teuerer Ausruestung, groesserer Leckgefahr, und teueren Reparaturkosten.

Spaeter, bei der Beschreibung unseres Systems (Seiten 17/18), verstaendnishalber, werden wir zum Vergleich auf diese Daten zurueck kommen.

Ein anderer wichtiger Nachteil dieser Tropfrohrart, ist die sehr kleine Beruehrungs-bzw Schweissungsflaeche des Tropfelementes mit dem inneren Mantel des Rohres. Besonders bei der Tropfrohrarten der Bilder 3, und 4, die Schweissung streckt sich nur laengs eines erhobenen, geschlossenen. duennen Kranzes, der auf das Tropfelement eingepraegt ist. Im Raum innerhalb dieses Kranzes herrscht atmosphaerischer Druck, weil aus diesem Raum, das Wasser durch eine Austrittsoeffnung auf dem Rohrmantel herausfliesst. Im Raum ausserhalb dieses Kranzes herrscht der innere hohe Wasserdruck des Rohres (ungefaehr 40mWS). Es ist naheliegend, dass nur eine kleine Unterbrechung der Schweissnaht dieses Kranzes genuegt, um die Funktion des Tropfelementes zu zerstoeren.

3) Die Tropfbewaesserungsart deren Tropfelement die Form eines halben Zylinders ist, woran ein druckkompensierender Koerper haengend geschweisst wird, weist eine grosse Materialverschwendunq, sowie einen noch groesseren hydraulischen Druckabfall auf.

4) Alle diese Tropfbewaesserungsarten die in den vorigen Paragraphen 1), 2), 3) erwaehnt wurden (Bilder 1, 2, 3, 4, 5 und 6), sind alle dadurch charakterisiert, dass das Rohr konstanten und symmetrischen Querschnitt hat, und dass die Tropfelemente durch einen Querspritzkopf gleich desjenigen welcher fuer die Isoliergabelproduktion benuetzt wird, in das Innere des Rohres eingefuehrt werden. Ausserdem alle diese Tropfelemente werden an die glatte innere Flaeche des Rohres geschweisst, sind demzufolge vom Rohr vollgedeckt, und aeusserlich nicht erkennbar. Ein grosser Nachteil dieser Tropfbewaesserungsarten, sind die sehr hohe Kosten die fuer die Apparaturen noetig sind, um die gedeckten Tropfelemente innerhalb des mit hoher Geschwindigkeit (20-40m/MIN) laufenden Rohres nachzuforschen, und anschliessend sehr schnell und absolut synchronisiert den Rohrmantel in dem Bereich genau oberhalb des Tropfelementes zu bohren. Dabei muss natuerlich die Rohrproduktion nicht unterbrechen werden.

5) Bei allen Tropfbewaesserungsarten mit aeusserlich glatten Rohren, (Bilder 1, 2, 3, 4, 5, und 6) kommt vor, dass die ausfliessenden Wassertropfen das Tropfrohr aeusserlich lecken, sofern sie fuer die Bewaesserung von Kulturen mit grossem Gefaelle, oder sogar von Kulturen auf ebenem Boden mit kleinen topographischen Hoehenunterschieden eingesetzt werden. Die Tropfen sammeln sich alle, unabhaengig von seinen tatsaechlichen Ausflussoeffnungstellen, im tiefsten Punkt des Tropfrohrbogens, der sich dabei bildet (Bild 25), mit katastrophallen Nachfolgen fuer die Pflanzen, falls sie noch jung und klein sind.

6) Alle andere Tropfbewaessrungsarten bei denen die Tropfelemente nicht innerhalb des Rohres eingefuehrt werden koennen, aber auf der aeussere Oberflaeche des Rohres mechanisch befestigt werden, (Bilder 7, 8, und 9) weisen grosse Schwierigkeiten beim Verpacken und Aufrollen auf, mit der Folge, dass ein grosser Prozentsatz seiner Tropfelemente bricht und auseinandergeht. Aber der grosse Nachteil ist der Mechanische- und Reibungswiderstand, den diese Tropfrohre beim Sammeln aus den Feldern, und beim Ziehen und Aufrollen mit Hilfe mechanisch angetriebenen Trommeln, die im Part-Take-Off (P.T.O)der Traktoren angeschlossen sind, aufweisen. Aufrolltrommeln dieser Art werden heute ausschliesslich fuer die Bewaesserungssysteme grosser Felder benutzt. Ausseredem, waehrend der ganzen Bewaesserungsperiode, Pflanzen und sonstiges Gewaechs wachsen speziell um die Tropfelemente herum.

Dieses Phaenomen, im Zusammenhang mit dem Mechanischen- und Reibungswiderstand auf Steinen und Erde, macht das Sammeln. Ziehen, und Aufrollen, am Ende der Bewaesserungsperiode unmoeglich.

Ein anderer Nachteil dieser Tropfbewaesserungsart ist, dass die Dimensionen ihrer Tropfelemente sehr klein gahalten werden muessen, damit kein grosser Widerstand beim Ziehen und Aufrollen entsteht. Diese Tatsache aber schraenkt ihre Funktionsmoeglichkeiten ein, weil die Meanderkanaele innerhalb der Tropfelemente sehr kurz, sowie die Kanaelequerschnitte sehr klein gehalten werden muessen, was mit einer sehr grossen Verstopfungsgefahr, (das aller groesstes Problem der Troprelemente), verbunden ist. Besonders ausgepraegt ist dieses Problem bei den Tropfbewaesserungsarten des Bildes 9, wobei der ganze druckkompensierende Mechanismus, und sogar die dazunoetige elastische Membran, eigentlich winzig gehalten worden sind, damit sie alle innerhalb des kurzen Halses 36, des kleinen Roerchenansatzes 7, der zugleich fuer die Befestigung auf dem Rohr des durchaus winzigen Tropfelementes dient, Platz finden!!.

7) Alle Tropfbewaesserungsarten (Bilder 1, 2, 3, 4, 5, und 6) die dadurch charakterisiert sind, dass ihr Rohr aeusserlich glatt ist, und dass ihre Tropfelemente innerhalb des Rohres geschweisst werden, haben auch einen anderen Nachteil und zwar:

Die Tropfelemente die dabei eingesetzt oder benutzt werden koennen, sind, sofern es ihre Groesse, geometrische Form, sowie ihre Funktion betrifft, ganz und bei weitem vorausbestimmt. Dabei werden alle andere Tropfelemente die es auf dem Markt gibt, ausgeschlossen. So, ist folgendes merkwuerdiges Phaenomen zu beobachten:

Obwohl diese Tropfbewaesserungsarten, mit dem aeusserlich glatten Rohr und den innerhalb geschweissten Tropfelementen, bessere Vorteile als alle andere Systeme bieten, gibt es eine sehr grosse Anzahl von individuellen Tropfelementen, die, wenn man als Tropfelemente allein betrachtet, besser und funktionsicherer im Vergleich zu denjenigen Tropfelementen sind, die sich fuer das Einfuehren und Schweissen innerhalb eines Rohres eignen. Weil aber diese funktionsichere Tropfelemente (Bilder 7, 8, und 9) bis jetzt keine andere Verbindungsmoeglichkeit gehabt haben, mit Ausnahme einer einzigen, und die waere, an der aeusseren Oberflaeche des Rohres, mechanisch, mittels eines kleinen und zerbrechlichen Roehreansatzes 7, (Bilder 7, 8, 9, 16), befestigt zu werden, weisen jetzt nur dieser Befestigungsart wegen, alle Probleme und Nachteile die im Paragraph 6 besprochen wurden, auf. Aus diesem Grund werden sie aus der Riesenmarkt der grossen Reihenkulturen ausgetrieben, obwohl sie von einfacher und billiger Technologie sind, und von allen kleinen Betrieben produziert werden koennen.

Demzufolge, herrschen heutzutage auf der Riesengrossenmarkt der Reihenkulturen, nur die anderen Tropbewaesserungsarten (Bilder 1, 2, 3, 4, 5, und 6) die ganz spezielle, innerhalb des Rohres geschweisste Tropfelemente benutzen. Diese Tropfbewaesserungsarten, der teueren Ausruestung der noetigen Nachforschung der gedeckten Tropfelemente und Bohrung des Rohres wegen, werden nur von grossen Industrieeinheiten produziert.

- Unsere Erfindung fuer die Tropfbewaesserung betrifft ein Tropfelement, welches innerhalb eines Rohres bei der Rohrproduktionsphase eingefuehrt und geschweisst wird. Die Tropfelemente werden eins nach dem anderen ins Rohr durch einen Querspritzkopf, gleich desjenigen welcher fuer die Isoliergabelproduktion benutzt wird, eingefuehrt.

- Das Tropfelement, ohne dass es zylindrisch ist, hat keine spezielle Form, (Bilder 10, 11, und 12) und koennte mit oder ohne druckkompressierenden Mechanismus ausgeruestet sein. Dieses Tropfelement, egal wie es aussieht, wird fest an einer Seite der inneren Oberflaeche des Rohres geschweisst, welches sich an dieser Stelle oertlich ausschwellt, (ausbaucht), ohne dass es noetig wird, dass das Tropfelement, den ganzen Umfang des Rohres, oder einen grossen Teil davon als Schweissflaeche braucht, was mit einem grossen Materialverbrauch verbunden sein wuerde, im Gegensatz zu den Tropfrohrsystemen die in den Bilder 1, 2, 5, und 6, zu betrachten sind.

Unseres Tropfelement koennte aus einem oder mehreren Teilen bestehen. In ihrer druckkompensierenden Version, der Wassereintritt erfolgt durch die Oeffnung 1, (Bilder 10, 11) und eine Filtrierschlitze. Weiter gelangt das Wasser durch einen Meanderfoermigen Kanal 12 (Bilder 18, 19), in den erweiteten Raum 11 fuer die Endregulierung der Wasserrate hinein, und in das Ausflussroehrchen 2. Wie bei allen druckkompensierenden Systemen, gibt es auch hier die bekannte elastische Membran 5 (Bilder 10, und 11), welche den Meanderkanal und den erweiteten Endregulierungsraum 11 deckt (Bilder 18, und 19). Das Erreichen, mit Hilfe einer Membran, konstanter Wasseraustrittsraten, unabhaengig von dem Wassereintrittsdruck, ist eine bekannte Technik, die ueberall in der Hydraulik Anwendung findet. Auf der einen Membranflaeche 19 herrscht der hohe Eintrittswasserdruck, waehrend die andere Membranflaeche den Meanderkanal 12 und den erweiteten Raum 11 fuer die Endregulierung der Wasserrate (Bilder 18, und 19, im Niederdruckbereich deckt. Je hoeher der Eintrittsdruck des Wassers in den Raum 19 steigt, desto mehr wird diese Membran den Meanderkanalquerschnitt 12, sowie die Austrittsoeffnung 4 in den erweiteten Raum 11 im Niederdruckbereich, verkleinert. Auf diese Weise, wird einerseits der Durchflussquerschnitt kleiner, und andererseits die Durchflussgeschwindigkeit groesser, so dass die Tropfwasserrate konstant (Bild 31), bleibt. An der aeusseren Tropfelementenoberflaeche, gibt es ein deutliches Wasseraustrittroehrchen 2, welches einerseits zur leichteren Tropfelementennachforschung, und andererseits zur automatischen Bohrung der Austrittswasseroeffnung dient. Ausserdem die Existenz dieses erhobenen Ausflussroehrchens 2, auf dem Tropfelement, erlaubt uns den grossen Endaustrittsraum 21 im Tropfelement abzuschaffen, was zu einer Reduzierung der Gesamthoehe des Tropfelementes fuehrt. Diese Hoehenreduzierung die bei 20-25% liegt, sieht man deutlich wenn man die Bilder 10, 11, und 12 mit den Bildern 26, 27, 28, vergleicht. Das minimiert den hydraulischen Widerstand des Wassers im Rohr, so wie die Probleme des Abklebens der Tropfelemente, die grosse Dimensionen und Hoehe haben, und haengend im Rohr angeschweisst sind. Ausserdem, allein die Existenz dieses Wasseraustrittsroehrchens 2, erlaubt eine festere Befestigung des Tropfelementes im Inneren des Rohres, und zusaetzlich eine absolute Abschirmmung derjenigen Raeume des Tropfelementes in denen Atmosphaerischer Druck herrscht, von derjenigen, in denen der hohe Druck des Wassers im Rohr herrscht.

Damit das Tropfelement 38 als einheitlicher Koerper innerhalb des Rohres eingefuehrt wird, gleitet es erst mit Hilfe eines Vorschubmechanismus 13 auf eine Fuehrung 15, die im Inneren des Querspritzkopfes 14 des Extruders (Bilder 29 und 30) gestreckt wird. Die Einfuehrung des Tropfelementes 38, koennte auch nur mittels des Vorschubmechanismus 13 durchgefuehrt werden, so wie auch nur durch einfaches freies Einwerfen. In dem Zeitpunkt, wo ein Teil des Tropfelementes 38, mit dem inneren Rohrmantel 39 in Beruehrung kommt, wird das Tropfelement angeschweisst, vom Rohr mitgenommen, und sich gleichzeitig erstens horizontal in der Richtung der Rohrproduktion, und zweitens vertikal dazu und radial zum Rohrquerschnitt bewegt. Dabei wird der heisse Rohrmantel zwangsweise nach aussen an diese Beruehrungsstelle ausweichen und ausbauchen, um das ganze Tropfelement umzuhuellen. Diese kombinierte Bewegung des Tropfelementes kann durch die Ausbildung einer schiefen Ebene 40, am Ende der Fuehrungsstange 15, erzielt werden. An der Stelle der schiefen Ebene 40, welche statisch ist, koennte auch bei einer anderen Ausfuehrung, eine kinematische Einrichtung eingesetzt werden, um die Bewegung des Tropfelementes gegen den inneren Mantel des vorbeigehenden Rohres zu realisieren. Die Fuehrungstange 15, wird nach der schiefen Ebene 40, wieder horizontal 41, um das angeschweisste Tropfelement 38, eine zeitlang nach aussen gegen das Rohr gepresst zu halten, damit der Rohrmantel mehr ausbaucht, und Schweissung und Umhuellung fester werden. Die Ausbauchung des Rohres, findet nur oertlich und unsymmetrisch (Bilder 11, 12, 13) statt, ohne dass dabei die Kontinuitaet des Rohres unterbrochen wird. Die Beruehrung des Tropfelementes mit dem Rohr, koennte ueberall erfolgen, z.B. unmittelbar vor den Rohrkalibriereinrichtungen u.s.w., und das Rohr koennte nachher auch durch andere Kalibriereinrichtungen, fuer innere oder aeussere Kalibrierung oder einfache Kuehlbaeder, durchgehen. Bei der Kuehlung wird der Einschrumpfungseffekt besonders in der Radialrichtung ausgenutzt, um ein allseitiges Umhuellen, sowie die groesstmoegliche Schweissflaeche, des Tropfelementes zu erzielen. Diese Tatsache macht jede Abklebegefahr unmoeglich, und schirmt die Raeume mit hohem und niedrigem Druck im Tropfelement von einander ab. Auf diese Weise werden die dazugehoerenden Nachteile der Tropfbewaesserungsart der Bilder 3 und 4 beseitigt, wobei die Schweissung ihrer Tropfelemente nur laengs einer duennen geschlossenen Linie erfolgt. Da dabei feste Verbindung und Schweissung gewaehrleistet werden, braucht das Tropfelement nicht mehr als das 1/4 des Rohrumfanges zu besetzen, was mit grossem Materialersparnis verbunden ist.

Das Tropfbewaesserungsrohr ist in seiner Endphase kontinuirlich, aber mit ausgepraegten unsymmetrischen Ausbauchungen in den Tropfelementenschweisstellen, und deutlich freien inneren Rohrquerschnitt ueber seine ganze Laenge, (Bilder 10, 11, und 12). Es wird dabei eine ideale und feste Verbindung und Schweissung in Vergleich zu anderen Tropfbewaesserungsarten, gewaehrleistet. Demnaechst, geht das Tropfbewaesserungsrohr staendig durch die Abzug- und Schneideineinrichtung durch, und auf den Wickler gewickelt. An dieser Stelle erwaehnen wir , dass bei den Extrusionslinien der bis jetzt bekannten Tropfrohren mit konstantem Querschnitt und inneren Tropfelementen, die komplizierte Einrichtung fuer die Tropfelementennachforschung zwischen Kuehlbad und Abzug, installiert ist. Diese Einrichtung kontolliert ebenfalls die komplizierte und vollsynchronisierte mehrkoepfige Bohreinrichtung, die, die Ausflussoeffnungen der Tropfelemente auf dem Rohr bohrt. Diese Einrichtungen erhoehen die Investitionskosten stark, aber wir brauchen sie nicht in unserem Fall, aus folgenden Gruenden:

- Wegen der oertlichen Ausbauchungen, die es an der Tropfelementenstellen auf unserem Rohr gibt, sind die Tropfelemente mit einem einfachen Kontaktschalter (Taster) leicht nachzuforschen.
- Weil unser Tropfbewaesserungsrohr keinen konstanten Querschnitt ueber seine ganze Laenge hat, koennten seine Tropfelemente wegen dieser Eigenartigkeit zusaetzlich noch ein erhobenes Ausflusswasserroehrchen 2 (Bilder 10, 11, und 12) haben. Dieses Ausflusswasserroehrchen 2, wird beim Einfuehren des Tropfelementes in das Rohr, tiefer im heissen Rohrmantel eingesteckt b.z.w. eingestossen, und erhebt sich deutlich. Eine einfache stationaere Schneidscheibe 42, installiert an einer Stelle der Produktionslinie (Bilder 21, und 22), dreht sich staendig ueber eine konstante Hoehe oberhalb des durchgehenden Tropfrohres, und schneidet lediglich nur diese erhobene Enden der Ausflusswasserroehrchen 2, und moeglicherweise auch ein kleines Rohrstueckchen (Bilder 20, 21, und 22) dazu.

Die Existenz dieses Ausflusswasserroehrchens 2, welches vor dem Wegschneiden offen oder geschlossen (blind) sein koennte, gewaehrleistet, dass die tropfen, sofort nach ihrem Austritt, sich vom Rohr abtrennen und nicht auf die Rohroberflaeche (Vergleich Bild 25) leckten. Anstatt eines Austrittswasserroerchens, koennte es auch eine einfache offene Rinne sein.

- Ein weiterer Vorteil unserer Erfindung ist, dass ausser diesem typischen Tropfelement welches frueher erwaehnt wurde. (Bilder 10, 11, und 12), es eine grosse Anzahl von individuellen Tropfelementen gibt, die aber nur eine Befestigungsmoeglichkeit haben, naemlich die Moeglichkeit der Befestigung ausserhalb des Rohres .

In den Bildern 13, 14, und 15, wird eine solche Anwendung mit einem erfolgreichen zylindrischen Tropfelement beschrieben.

Das betrachtete Tropfelement hat im Bild 16, seine Grundform. Wenn wir ihm jetzt sein zerbrechliches Ansatzroehrchen 7, wegschneiden, welches zur seiner Befestigung dient, und was nicht mehr gebraucht wird, bleibt das Tropfelement in der Form des Bildes 17 uebrig, wird nach unserem System innerhalb des Rohres eingefuehrt (Bild 13, 14, 15) und einwandfrei verwertet.

Andere Vorteile:

- Wie bekannt, unser Tropfelement besetzt nicht den ganzen Rohrumfang sondern nur 1/4 davon. In folgedessen, unser Tropfbewaesserungsrohr, koennte bei seiner Produktionsphase, von der Abzugseinrichtung leicht gepresst werden, und nachher im Wickler flachgewickelt werden, ohne dass es irgendeine Gefahr des Abklebens des Tropfelementes dabei existiert. Auf diese Weise werden das Verpackungsvolumen, bzw die Transportkosten erheblich reduziert.
- Weil unser Tropfelement keine zylindrische Form hat, nicht den ganzen Rohrumfang besetzt, und von einer unsymmetrischen Ausbauchung des Rohrmantels umhuellt wird, kann genau wie es ist und ohne irgendeine Aenderung, fuer alle Rohrgroessen so wie Rohrdicken z.B. $\Phi 16$, $\Phi 17$, $\Phi 20$ mm verwendet werden, was Investitionskostenersparnis, Matrizenersparnis u.s.w., mit sich bringt. Bei allen anderen Rohrbewaesserungrohrarten mit innerhalb geschweissten Tropfelementen, egal ob sie zylindrische oder keine zylindrische Form haben, Bilder 1, 2, 3, 4, 5, 6, sobald der Rohrdurchmesser, in manchen Faelle sogar nur die Rohrdicke geaendert wird, muss unbedingt eine andere Matrize fuer das Tropfelement gebraucht werden. Das ist logisch, weil der Rohrradius bei allen diesen Bewaesserungsarten, immer mit dem Kruemmungsradius des Tropfelemetes uebereinstimmen muss, weil die Beruehrungs- bzw Schweissflaeche ein ganzer Zylinder, oder ein Zylinderteil immer ist.

6

Aber in unserem Fall die Kruemmung des Tropfelementes, weil Kruemmungsradius im engeren Sinn nicht existiert, steht in ueberhaupt keinem Zusammenhang mit dem Rohrradius. Der Rohrmantel wird an die Schweisstelle einfach ausgebaucht, und bekommt sowieso die Form des Tropfelementes, egal wie es aussieht.

- Ausserdem, aus der Tatsache heraus, dass unsere Tropfelemente keine zylindrische oder sogar symmetrische Form haben, werden sie mit dem Wasserdruck an die innere Wand gepresst und dabei im Gegensatz zu den zylindrischen, die dabei einer Abklebegefahr unterworfen sind, fester gehalten.
- Weil unser Tropfbewaesserungsrohr aussen glatt ist, weist es keinen mechanischen oder Reibungswiderstand, bzw irgenwelches Problem beim Sammeln, Ziehen und Aufrollen auf mechanisch angetriebenen Trommeln, auf.
- Das innere des Rohres bleibt absolut frei von irgenwelchen Ausformmungen oder sogar Teilen, die einen hydraulischen oder anderer Art Widerstand, oder zusaetzlichen Druckabfall, hervorrufen. So, kann es mit der hoeheren Tropfratenhomogenitaet und der maximal moeglichen einsetzbaren Laenge des Tropfrohrstranges im Vergleich zu allen anderen Tropfrohrarten, die gleichen Rohrdurchmesser und Tropfwasserrate haben, bewaessern.

Jetzt betrachten wir naeher ein Tropfrohr unserer Erfindung mit Φ16mm Aussendurchmesser, 1mm Rohrdicke. 3,5 lit/h Tropfwasserrate, und 0,30m Tropfstellenabstand. (Das sind genau die gleichen Daten mit denjenigen des entsprechenden Beispiels auf der Seite 5, wobei ein Tropfrohr der Art des Bildes 3 und 4 betrachtet wurde). Auch in diesem Fall wird eine Tropfrohrstranglaenge von 100m angenommen, und der entsprechende Druckabfall ermittelt.

In unserem Fall, zur Berechnung des Druckabfalls, gilt die bekannte Form von HAZEN-WILLIAMS fuer einen glatten Kunstoffrohr mit 330 Austrittswasserstellen (so viele entsprechen einem 100m langen Strang):

$$J = 1.128 \cdot 10^{12} \cdot \left(\frac{Q}{C}\right)^{1.852} \cdot d_{iN}^{-4.87} \quad [\%]$$

$$J_N = J \cdot F, \quad \text{wobei} \quad F = \frac{\sum_{1}^{N}(i^{1.85})}{N^{2.82}}$$

$$Q = Lit/s$$
$$C \cong 150$$
$$N = Austritts\text{-}öffnungen$$

Der Druckabfall JN des Wassers laengs dieser Rohrlaenge, oder die Druckdifferenz, die der Eintrittsdruck am ersten und letzten Tropfelement des Stranges aufweist, ist der Groessenordnung der 10 mWS!! Das ist aber 4mal kleiner wie die entsprechende Druckdifferenz im Falle der anderen Tropfrohrart, die auf Seite 5 diskutiert wurde, und die, 40m WS gefunden worden war.

- Im allgemeinen: Unsere Konstruktion ist einfacher und billiger, und die Tropfelementenbefestigung verlaesslicher im Vergleich zur anderen Tropfbewaesserungsarten. Andere Versionen:
- Bei einer anderen Version, unseres Tropfelement, wegen seiner grossen Gestaltungsflexibilitaet, koennte nur um einen Prozentsatz seiner Hoehe innerhalb des Rohrmantels gesenkt werden. Der Rohrmantel wuerde dabei entsprechend ausgebaucht, um es zum Teil umzuhuellen, und der ungedeckte restliche Teil des Tropfelementes, haette einwenig innerhalb des Rohres dementsprechend haengen geblieben.
- Bei einer anderen Version, koennte der Meanderkanal 12 abwesend sein, und die Membran 5 nur den erweiteten Raum der Endregulierung 11 und die Austrittsoeffnung 4 abdecken.
- Ausserdem, die innere Rohroberflaeche an der Tropfelementenschweiss- und Ausbauchungsstelle, koennte mit dem Tropfelement selbst eine engere funktionelle Arbeitskopplung gewaehren. Sie koennte dabei z.B. direkt eine der Flaechen des Meanderkanals sein, der die Tropfwasserrate bestimmt. Auf diese Weise wuerde die Hoehe des Tropfelementes, reduziert.
- Bei einer anderen Version, anstatt unser Tropfelement, innerhalb eines Rohres geschweisst zu werden, koennte es an einem Kunststoffstreifen geschweisst und versenkt werden, damit es dabei vollgedeckt wird. Die Streifenbreite, entspricht dem Rohrdiameter den wir waehlen. Das Streifen wird demnaechst in der Form eines geschlossenen Querschnitts gefaltet, und ueber seine ganze Laenge mit ausgepraegten oder nicht ausgepraegten Enden (Ueberlappung) zusammengeschweisst, Bild 23, 24, 24a. Dabei wird das Tropfrohrherstellungsverfahren, sehr vereinfacht.
- Bei einer anderen Version, koennte das Ausflussroehrchen 2, wegfallen. Es bleiben nur die Membran 5, der Meander- oder anderer Form Kanal 12, der erweitete Raum 11 fuer die Endregulierung, die Wasseraustrittsoeffnung 4, und der Endaustrittsraum 21, der durch einen erhobenen Kranz 20, abgeschlossen wird (Bilder 26, 27, 28).
- Bei anderen noch einfacheren Versionen des druckkompensierenden Mechanismus (Membran 5), koennte der erweite Raum 11, sowie auch andere Teile ueberhaupt wegbleiben.

Demnaechst betrachten wir eine Version unserer Methode zur Erzeugung unseres Tropfbewaesserungsrohres, Bild 32 und 32a:

Das Tropfelement 38, wird einfach ins Innere des extrudierten Rohres 39, durch einen Querspritzkopf eingeworfen, und bei seinem freien Fall erst leicht auf dem heissen inneren Rohrmantel geschweisst. Nachher, wird das Tropfelement 38 zusammen mit dem Rohr, mittels einer schiefen Ebene 40, oder eines kinematischen Mechanismus, nach aussen gepresst. Dabei wird das Tropfelement sich einmal horizontal und gleichzeitig vertikal (radial) bewegt, mit entsprechender Ausbauchung des Rohrmantels 39, der dadurch das Tropfelement umhuellt.

Bei der Gelegenheit, werden wir eine andere Methode betrachten, die zur Herstellung eines anderen Tropfbewaesserungsrohres mit konstanten Rohrquerschnitt, Bilder 3, 4, 5, 6. Diese Methode, wird in den Bildern 33 und 33a in zwei Stufen realisiert:

Das zugehoerige Tropfelement 38, wird dabei nicht beschleunigt um die bestimmte Geschwindigkeit z.B. V3 des Rohres am Anfang der Kalibrierduese 43 zu erreichen sondern es wird einfach, mit irgendeiner zufaelligen Geschwindigkeit ins Innere des warmen Rohres, an irgendeine Stelle zwischen Extruderkopf und Kalibrierduese, durch ein Querspritzkopf eingeworfen, und bei seinem freien Fall, erst leicht auf dem heissen inneren Rohrmantel geschweisst. Charakteristisch ist, dass die lineare Geschwindigkeit V2 des Rohres in der Beruehrungstelle mit dem Tropfelement, beliebig gewaehlt werden koennte. Diese Geschwindigkeit steht in keinerlei Zusammenhang mit der linearen Geschwindigkeit V1 mit welcher das extrudierte Rohr aus dem Extruderkopf herausfliesst, oder mit der linearen Geschwindigkeit V3, mit welcher es in der Kalibrierduese 43 einmuendet.

Einfach, wenn V1<V3,folgt V1<V2<V3. Aber natuerlich wenn V1=V3 , muss zwangsweise auch V1=V2=V3 . Das zugehoerige Tropfelement 38, gelangt gemeinsam mit dem Rohr, in der Kalibrierduese 43, wobei Rohr und Tropfelement, zwischen inneren Fuehrungsstange 15 und Kalibrierduese 43 zusammengepresst und fester geschweisst werden. Das Rohr 38 behaelt dabei seinen konstanten Querschnitt. Charakteristisch ist auch, dass die Schweissung des Tropfelementes nicht durch eine einfache und konstante Pressung, die, die innere Fuehrungsstange ausuebt, erfolgt, sondern sie wird von den schwingenden stossartigen oder vibratorischen Bewegungen 44, der inneren Fuehrungstange 15 gewaehrleistet. Diese schwingende Bewegungen 44 erlauben, dass das Tropfelement. welches vom Rohr selbst gefuehrt wird, die Schlitze zwischen der festen Kalibrierduese und der inneren Fuehrungstange, ohne Stoss passiert. Das Tropfelement, wird gleichzeitig schwingend und stossartig, aber jetzt senkrecht zu seiner Bewegung, zwischen denen gepresst, was eine festere Schweissung gewaehrleistet. Der Grund dafuer ist, dass wegen dieser senkrechten und schwingenden Bewegung 44 der inneren Fuehrungsstange 15 oder eines ihren Teiles, die Kraefte die dabei wirken, keine konstante Staerke haben, b.z.w. die Schlitze zwischen der Fuehrungsstange 15 und der Kalibrierduese 43, ihre Breite staendig aendert. Ausser der Schwingung, koennten auch anderen Methoden benutzt werden, um die Breite der Schlitze zwischen Fuehrungsstange 15 und Duese 43, staendig zu aendern. Diese Breitenaenderung ist aber auch mit einer staendigen Aenderung der Kraeften, die auf das Tropfelement wirken, verbunden. Dabei koennte das Tropfelement auch noch durch einen Vorschubsmechanismus unterstueztzt und gestossen werden, oder die Kalibrierduese selbst eine schwingende Bewegung ausfuehren.

Die bis jetzt bekannten Methoden fuer die Herstellung Tropfbewaesserungsrohren mit konstantem Querschnitt, benutzen komplizierte Systeme und Vorschubmechanismen, um die Tropfelemente auf die bestimmte Geschwindigkeit V3. die das Rohr bei seinem Eintritt in der Kalibrierduese hat, zu bringen. Das Tropfelement wird zwischen Fuehrungsstange und Kalibrierduese gepresst und dabei geschweisst. Diese Methode braucht hohe Investition und hat viele Nachteile: Die erstmalige Beruehrung des Tropfelementes mit dem Rohr sowie der Beginn seiner Schweissunq, erfolgt am Anfang der festen Kalibrierduese, wobei aber die hervorgerufene Verformung des warmen Rohres, stossartig stattfindet. Die Ursache hierzu ist. dass das Rohr stossartig gleichzeitig von aussen von der festen Kalibrierduese, und von innen vom kalten Tropfelement, welches von unten von der festen Fuehrungsstange und von hinten von dem Einfuehrungskolben, gepresst wird. Die feste Kalibrierduese wird genau an ihrem Anfang, vom Rohr mit grosser Geschwindigkeit (40-50m/1') stossartig "geschlagen", worauf es demnaechst geschlept und gezogen wird. Wegen dieser hohen Geschwindigkeit, der starken und vielen Kraeften die zugleich an einem Punkt binnen einer sehr kurzen Zeitspanne einwirken, des Ziehens und Schleppens des Rohres aussen innerhalb der Kalibrierduese, des Gleitens des Troprelementes auf der Fuehrungsstange, sowie der noetigen Synchronisierung der beiden Geschwindigkeiten. (Tropfelementeintritt und Rohrproduktion), ist die Kontrollierung des Produktionsablaufes ueberhaupt sehr problematisch, was auf die Schweissungsqualitaet nachteilig wirkt.

Die Methode der senkrechten Schwingungen 44 oder der Vibration der Fuehrungsstange oder eines ihren Teiles, kann auch auf unsere eigentliche Herstellungsmethode Bilder 29, 30, 32, 32a, zusaetzlich angewendet werden, damit das Gleiten des Tropfelementes 38, auf die Flaechen 40 und 41 der Fuehrungsstange, erleichtert wird. Was die Kalibrierung bei unserem Tropfbewaesserungsrohren, Bilder 10, 11,und 12, betrifft, kann sie innere als auch aeussere Kalibrierung sein.

Was schliesslich die Bewegungsrichtung des Tropfelementes bei seiner Beruehrung mit dem Rohr betrifft, kann sie nur horizontal als auch nur vertikal im Verhaeltnis zu der Produktionsrichtung des Rohres sein.

BESCHREIBUNG DER BILDER

| | |
|---|---|
| Bild 1. | Ist ein Laengsschnitt eines bekannten Tropfwaesserungsrohres mit zylindrischem druckkompensierenden Tropfelement. |
| Bild 2. | Ist ein Querschnitt des Bildes 1, |
| Bild 3. | Ist ein Laengsschnitt eines bekannten Tropfbewaesserungsrohres konstantes Querschnittes mit innerhalb eingeschweissten druckkompensierenden Tropfelementen, die kleinen Aussendimensionen haben. |
| Bild 4. | Ist ein Querschnitt des Bildes 3. |
| Bild 5. | Ist ein Laengsschnitt eines bekannten Tropfbewaesserungsrohres mit innerhalb geschweisstem druckkompensierendem Tropfelement. |
| Bild 6. | Ist ein Querschnitt des Bildes 5. |
| Bild 7. | Ist ein Laengsschnitt eines bekannten Tropfbewaesserungsrohres, bei welchem das Tropfelement ausserhalb des Rohres befestigt ist. |
| Bild 8. | Ist ein Laengsschnitt eines bekannten Tropfbewaesserungsrohres mit Iropfelementen, die ausserhalb des Rohres befestigt sind. |
| Bild 9. | Ist ein Laengsschnitt eines bekannten Tropfbewaesserungsrohres mit druckkompensierenden Tropfelementen von sehr kleinen Dimensionen, die ausserhalb eines fertigen Rohres befestigt werden. |
| Bild 10. | Ist ein Querschnitt unseres Tropfbewaesserungsrohres mit oertlicher Ausbauchung, ohne Austrittswasserroehrchen 2. Aber auch in diesem Fall, wo das Austrittswasserroerchen 2 wegbleibt, ist die Schweissung, der kontakt, und die Abschirmung zwischen den Gebieten mit hohem und niedrigem Druck, vollkommen. |
| Bild 11. | Ist ein Querschnitt des Bildes 10. |
| Bild 12. | Ist eine Ansicht der Bilder 10 und 11. |
| Bild 13. | Ist ein Laengsschnitt einer Version unseres Tropfbewaesserungsrohres mit oertlicher Ausbauchung, worin das bekannte zylinderfoermige Tropfelement der Bilder 16, und 17, fuer aeussere Befestigung geeignet, innerhalb dieser Ausbauchung eingefuehrt, und angeschweisst ist. |
| Bild 14. | Ist ein Querschnitt des Bildes 13 |
| Bild 15. | Ist eine Ansicht des Bildes 13 und 14. |
| Bild 16. | Ist ein bekanntes Tropfelement zylindrischer Form, fuer aeussere Befestigung auf fertigem Rohr geeignet. |
| Bild 17. | Ist das gleiche Tropfelement des Bildes 16, wobei sein Ausatzroerchen, was fuer seine aeussere Befestigung auf fertigem Rohr dient, ihm weggenommen ist. |
| Bild 18. | Ist ein Meanderkanal der den Wasserdruckabfall vergroessert. |
| Bild 19. | Ist ein Kanal anderer Form der den Wasserdruckabfall vergroessert. |
| Bild 20. | Ist ein Laengsschnitt unseres Tropfbewaesserungsrohres, mit oertlicher Ausbauchung, wobei das erhoehte Austrittswasserroehrchen, vor der Phase seines, wegschneidens, sichtbar ist. |
| Bild 21. | Ist ein Querschnitt unseres Tropfbewaesserungsrohres des Bildes 20 bei der Phase des Wegschneidens seines Austrittsroehrchens. |
| Bild 22. | Ist eine Ansicht des Bildes 21. |
| Bild 23. | Ist eine Ansicht einer Version unserer Tropfelementbefestigung in einem Tropfbewaesserungsrohr, welches durch das Fallten und Zusammenschweissen der Enden eines Kunstoffstreifens, entsteht. Dieses Rohr ist im Schutzumfang der Ansprüche nicht eingeschlossen. |
| Bild 24. | Ist ein Querschnitt des Bildes 23. |
| Bild 24a. | Ist ein Querschnitt einer Version unserer Tropfelementbefestigung in einem Tropfbewaesserungsrohr, welches durch das Falten und Zusammenschweissen der Enden eines Kunstoffstreifens entsteht, wobei diese Enden sich ueberlappen, damit kein deutlicher Grat zu sehen ist. Dieses Rohr ist im Schutzumfang der Ansprüche nicht eingeschlossen. |
| Bild 25. | Ist eine schematische Darstellung eines, auf Freiland mit grossen topographischen Hoehenunterschieden und Gefaellen verlegten Tropfbewaesserungsrohres, wobei seine Tropfen, im tiefsten Punkt des Tropfrohrbogens, der sich dabei bildet, unabhaengig von ihren tatsaechlichen Ausflussoeffnungsstellen, zusammenfallen. |
| Bild 26. | Ist ein Laengsschnitt eines unseren Tropfbewaesserungsrohres, welches kein Austrittswasser- |

roehrchen, sondern einen Endaustrittsraum Euer das Wasser besitzt.

Bild 27.　　　　　　　Ist eine Ansicht des Bildes 26 mit dem Endaustrittsraum 21 und die Wasseraustrittsoeffnung 22.

Bild 28.　　　　　　　Ist ein Querschnitt des Bildes 26.

Bild 29.　　　　　　　Ist eine schematische Darstellung des Einfuehrens unseres Tropfelementes innerhalb des Rohres bei der Rohrproduktion, und zwar im Zeitpunkt wo das Tropfelement erstmal in Beruehrung mit dem Rohrmantel kommt.

Bild 30.　　　　　　　Ist die naechste Phase des Einfuehrens des Bildes 29, nachdem das Tropfelement seine Endstellung im Rohrmantel genommen hat, und fest geschweisst worden ist.

Bild 31.　　　　　　　Ist die charakteristische Kurve der Tropfwasserrate eines druckkompensierenden Tropfelementes, als Funktion der verschiedenen Rohrwasserdruecken.

Bild 32, Bild 32a.　　Zeigt eine schematische Darstellung einer Version des Einfuehrens des Tropfelementes unseres Tropfrohres in zwei Phasen: Die erste zeigt das Einwerfen des Tropfelementes innerhalb des Rohres, und die zweite die oertliche Ausbauchunq des Rohres, und die Umhuellung des Tropfelementes.

Bild 33, Bild 33a.　　Zeigt eine schematische Darstellung einer Version unserer Methode, die fuer das Einfuehren den Tropfelementen innerhalb eines Tropfrohres mit konstantem Querschnitt, eingesetzt wird. Die erste Phase Bild 33, zeigt das Einwerfen des Tropfelementes innerhalb des Rohres, und die zweite, Bild 33a, das Zusammenschweissen beiden Komponenten, mit Hilfe der schwingende Bewegung der inneren Fuehrungstange, oder der Kalibrierduese.

Die Bilder, die Skizzen und die Anwendungen in dieser Beschreibung sind unverbindlich. Die sind dazu herangezogen nur um den Hauptsinn der Erfindung verstaendlich zu machen. Wir sind also nicht verbunden mit den Formen, die Daten oder die verschiedenen Groessen die hier erwaehnt werden

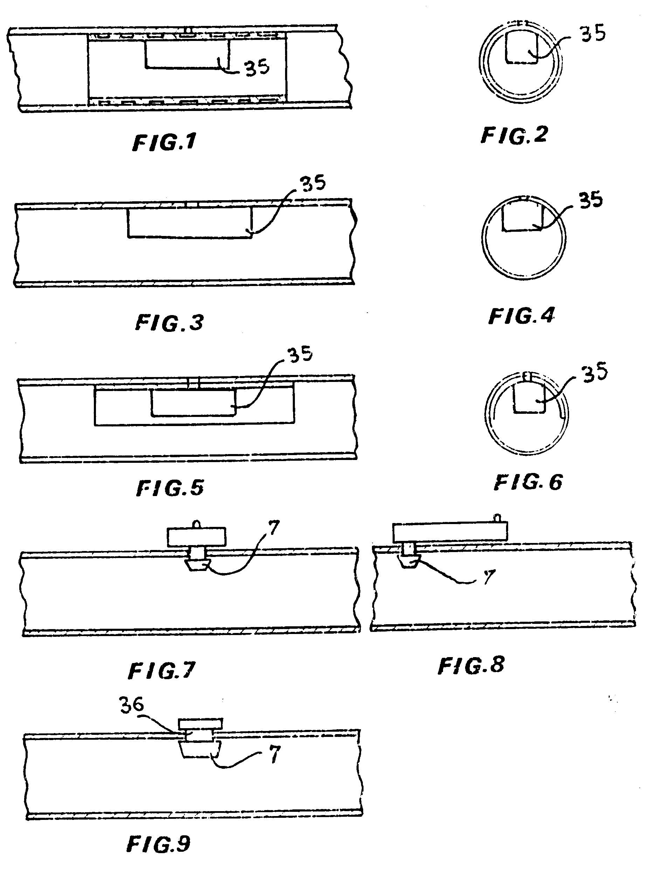

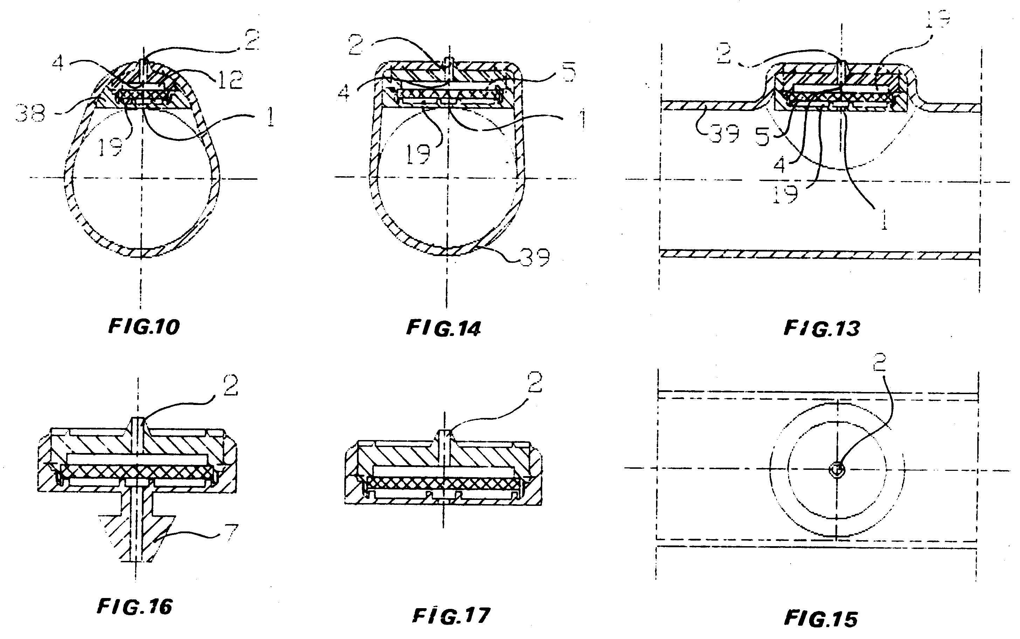

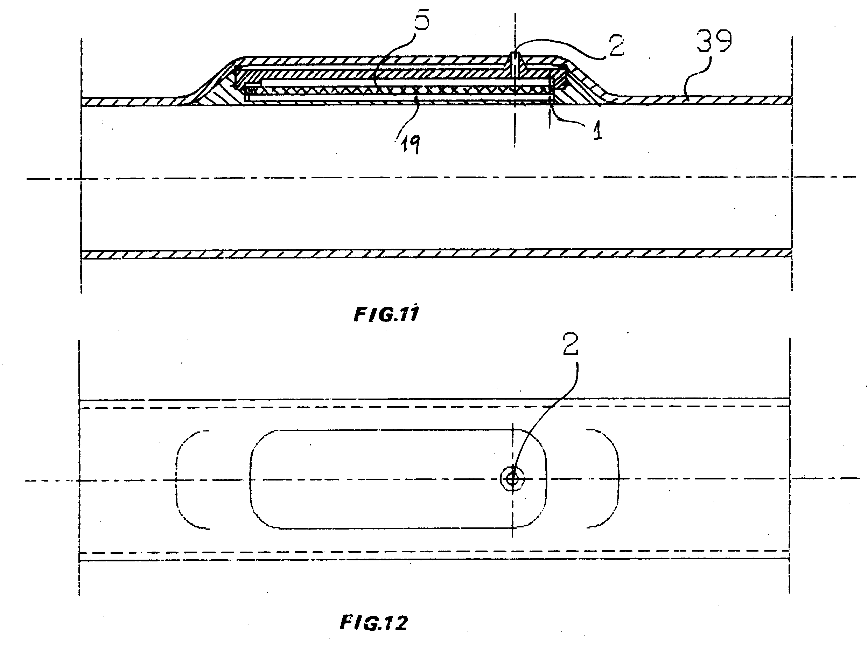

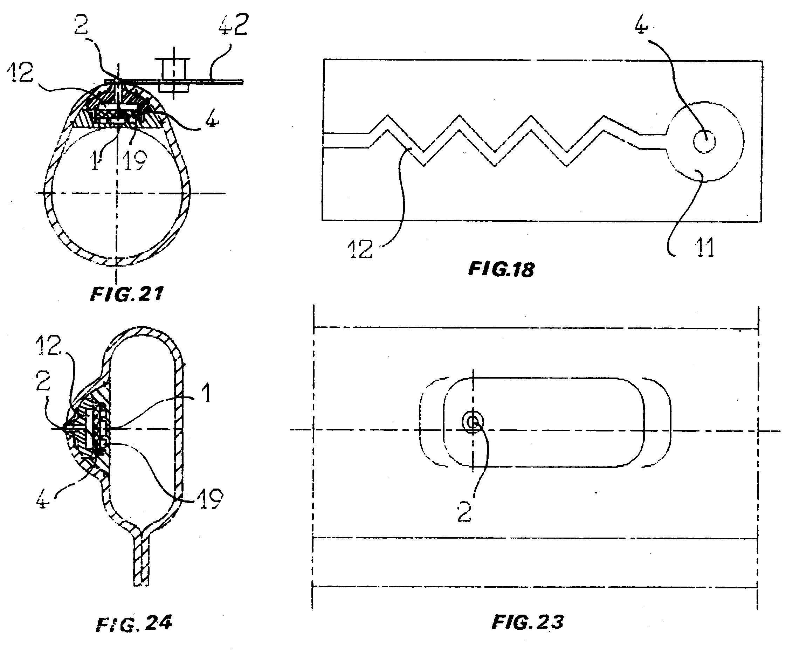

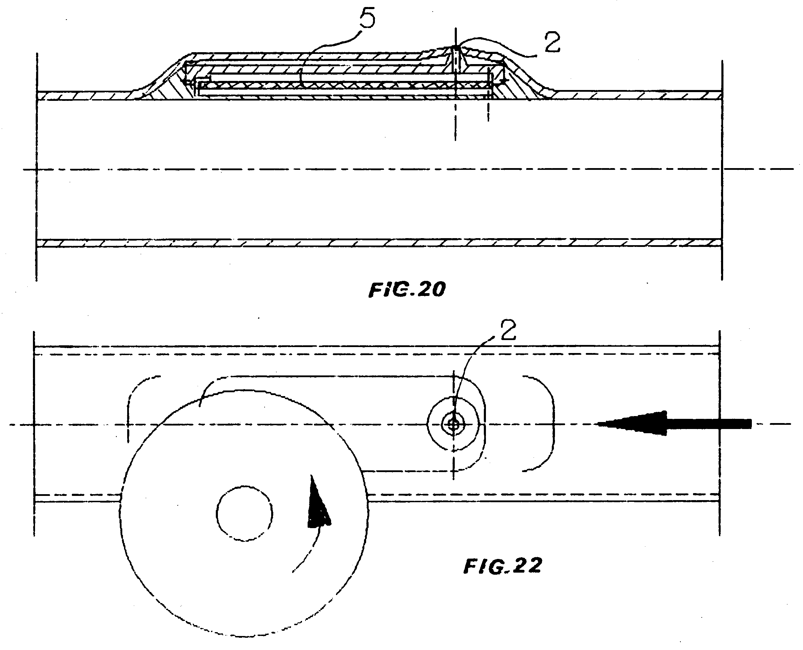

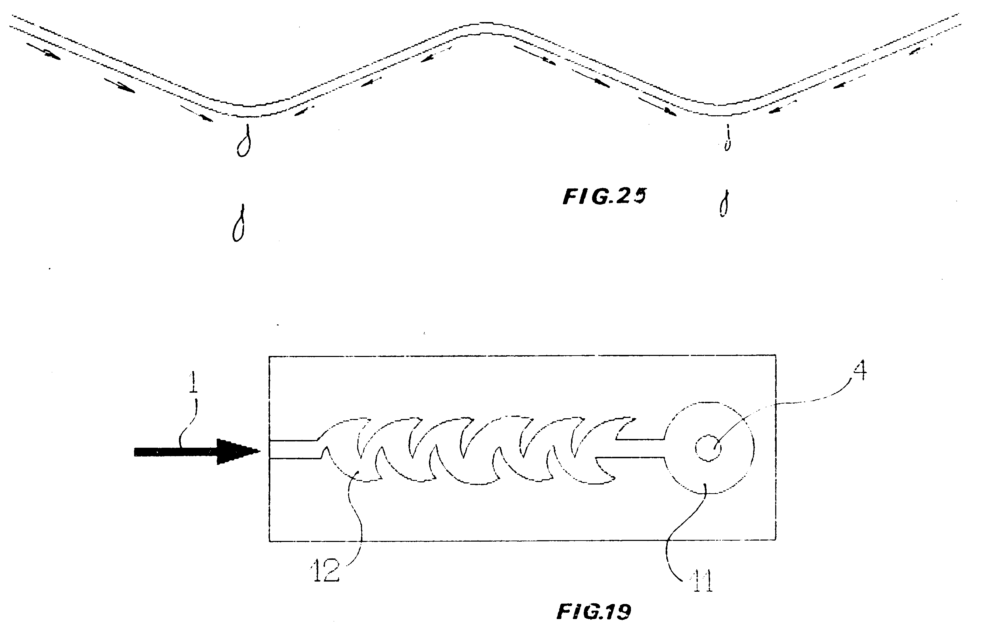

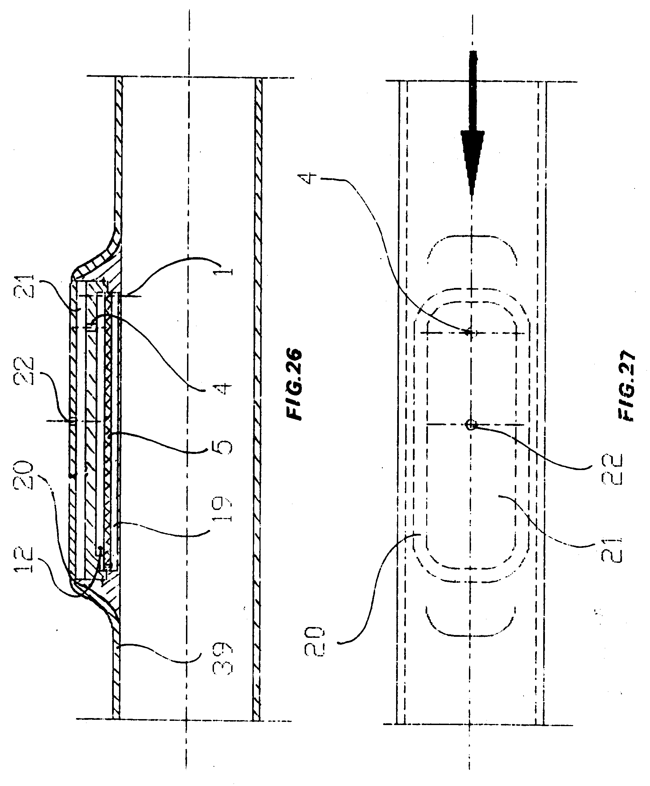

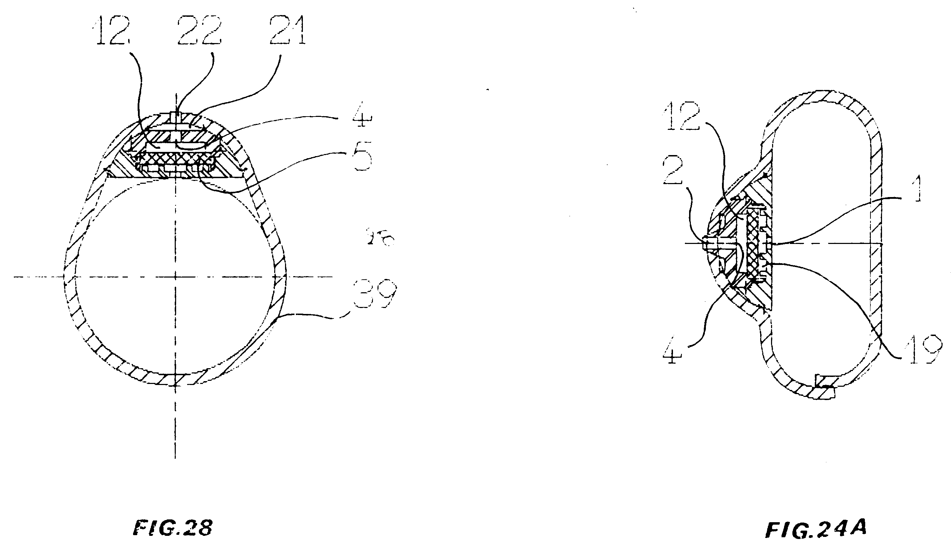

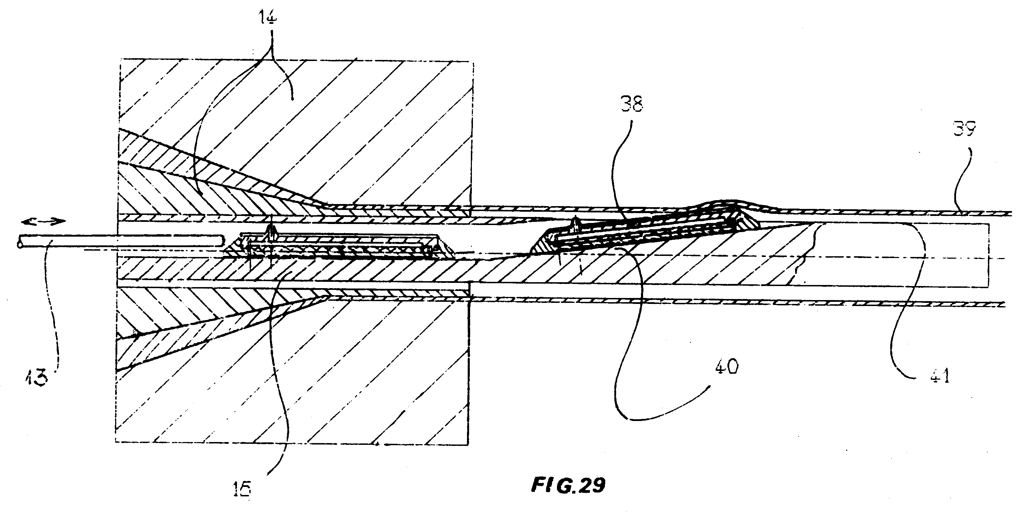

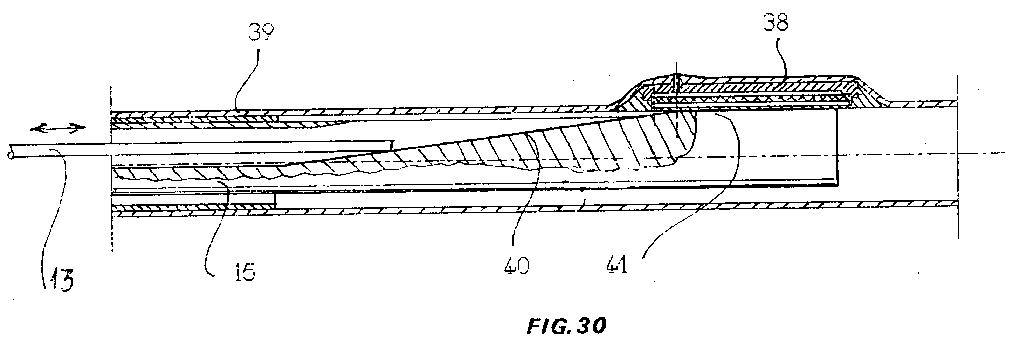

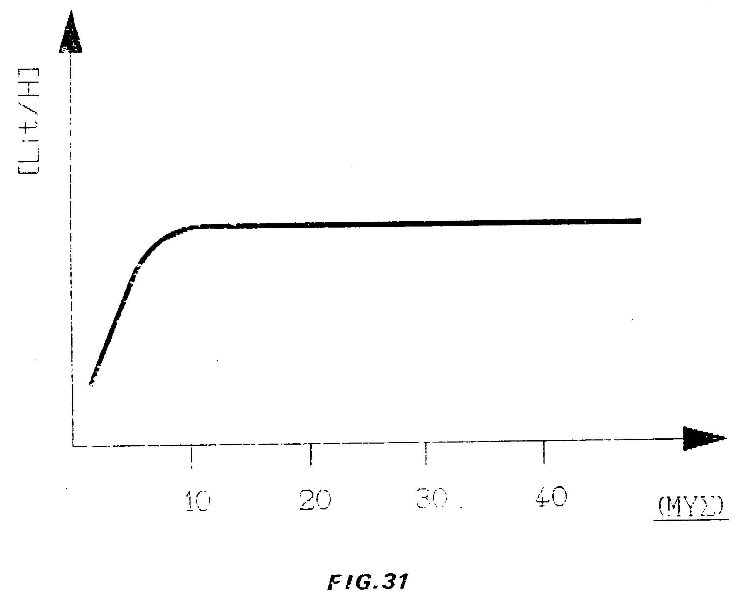

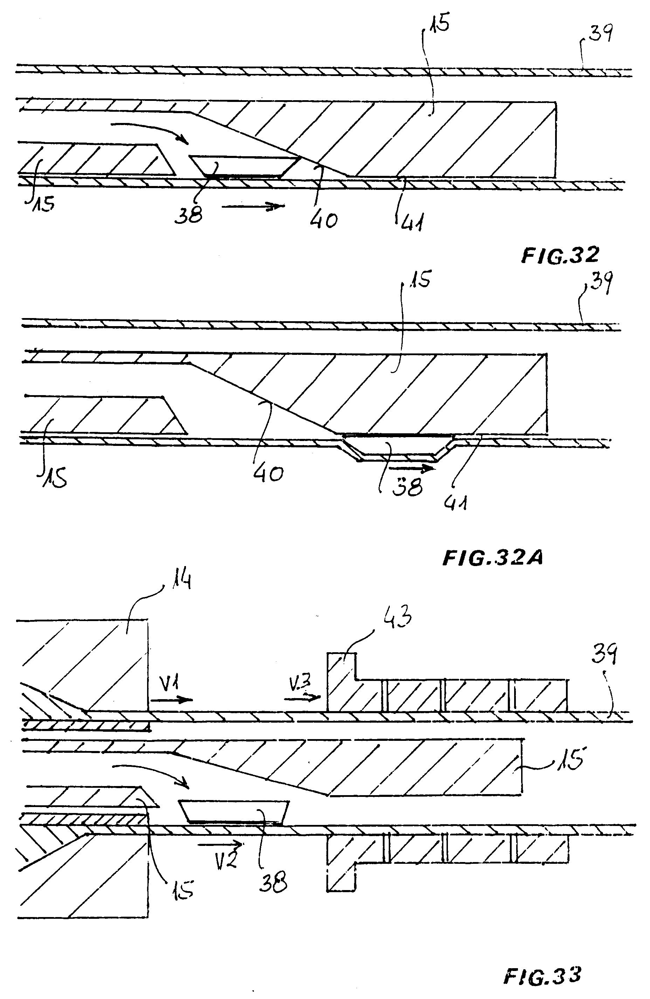

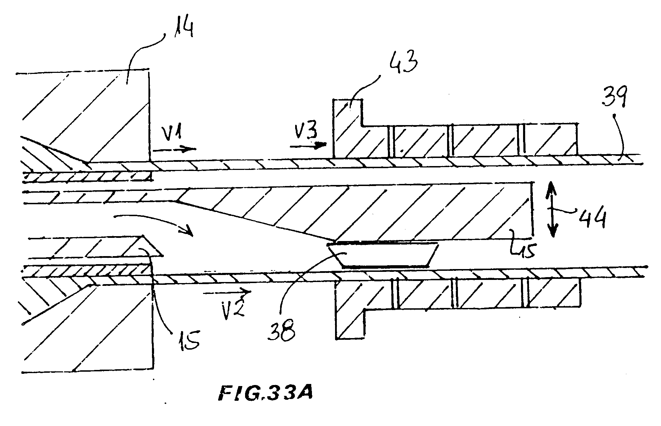

## Patentansprüche

1.　Verfahren zur Herstellung von einem Tropfbewässerungsrohr mit konstantem oder variablem Querschnitt, welches aus einem extrudierten Rohr (39) und einzelnen Tropfelementen (38) besteht, wobei die Tropfelemente (38) bei der Rohrproduktion, durch die Wirkung einer in das innere des warmes extrudiertes Rohres (39) vorgesehenen Stange (15) geschweist werden, und wobei eine Schlitze (100) zwischen Stange (15) und inneren Wand des Rorhes (39) vorgesehen ist,
dadurch gekennzeichnet,

daß die Tropfelemente (38) in radialer Richtung durch die Änderung der Breite der Schlitze (100) zwischen Stange (15) und innere Wand des Rorhes (39) gepreßt werden, um die Schweissung der Tropfelementen (38) an die innere Wand des Rohres (39) zu gewährleisten, und

daß die Stange (15) an die Tropfelemente (38) eine stoßartige oder schwingende oder vibratorische oder anderer Art periodisch sich ändernte Pressung ausübt.

2.　Verfahren zur Herstellung von Tropfbewässerungsrohr mit konstantem Querschnitt nach Anspruch 1, wobei die maximale Breite der Schlitze (100) zwischen Stange (15) und innerer Wand des Rorhes (39) wärhend des Vorganges der Herstellung des Tropfbewässerungsrohres breiter als die Höhe der Tropfelementen (38) ist, so daß das Tropfelement zwischen Stange und Rorh ohne Stoss passiert.

3.　Verfahren zur Herstellung von Tropfbewässerungsrohr nach Anspruch 1, wobei eine Kalibrierdüse (43) für das extrudiertes, warmes Rohr vorgesehen ist, welche Kalibrierdüse (43) selbst eine schwingende Bewegung ausführt.

4.　Verfahren zur Herstellung von Tropfbewässerungsrohr nach Anspruch 1, wobei ein Vorschubsmechanismus (13) für die Fürhung des Tropfelementes (38) innerhalb des Rohres vorgesehen ist.

5.　Verfahren zur Herstellung von Tropfbewässerungsrohr mit konstantem Querschnitt nach Anspruch 1, wobei die Tropfelementen (38) an die innere Wand des Rohres (39) gegen eine Kalibrierdüse (43) gepreßt sind.

6.　Verfahren zur Herstellung von Tropfbewässerungsrohr nach einer der Ansprüche 1 bis 5, wobei die Stange (15) ein bewegliches Teil aufweist, mit dem eine stoßartige oder schwingende oder vibratorische oder andere Art periodisch sich ändernte Pressung an die Tropfelemente (38) ausübt.

7. Tropfbewässerungsrohr mit variablem Querschnitt, das aus einem extrudierten Rohr und Tropfelementen besteht, dadurch gekennzeichnet, daß das Rohr örtliche Ausbauchungen aufweist, woran die Tropfelemente (38) an der innere Wand des Rohres angeschweist werden und weniger als ein Viertel der Abwicklung des Umfanges des Rohres besetzen.

## Claims

1. Method of production of a dripline with constant or variable cross section, consisting of an extruded duct (39) and individual emitters (38) which emitters are welded in the inner surface of the warm extruded duct by using a driver (15) which is located inside the warm extruded duct (39), whereby a clearance (100) exists between the driver (15) and the inner wall of the duct (39), whereby the emitters (38) are pressed in radial direction by changing the height of the clearance (100) between the driver (15) and the inner wall of the duct (39), in order to be welded at the inner wall of the duct (39), and whereby the driver (15) exerts on the emitters (38) a impulsive or periodic or vibratory pressure.

2. Method of production of a dripline with constant cross section in accordance with claim 1, whereby the clearance between the driver (15) and the inner wall of the dripline (39) during the production phase of the dripline, is bigger than the height of the emitter (38), allowing the emitter to pass free between the driver and the duct.

3. Method of production of a dripline in accordance with claim 1, whereby a calibration unit (43) is provided for the warm extruded duct, which calibration unit (43) performs a vibratory motion.

4. Method of production of a dripline in accordance with claim 1, whereby a carrying mechanism (13) for the driving of the emitter (38) inside the duct is provided.

5. Method of production of a dripline in accordance with claim 1, whereby the emitters (38) are pressed at the inner wall of the duct against a calibration unit (43).

6. Method of production of a dripline in accordance with claims 1-5 whereby the driver (15) provided, is equipped with a moving part which exerts an impulsive or periodic or vibratory or periodically changing pressure on the emitters (38).

7. Dripline duct with variable cross section, consisting of an extruded duct and emitters whereby the duct is locally swelled, in which the emitters (38) are welded in the inner surface of the duct, with each emitter extending less than a quarter of the circumference of the duct.

## Revendications

1. Méthode de production d'un tuyau d'irrigation à goutteurs de section constante ou variable, composé d'un conduit formé par extrusion (39) et des goutteurs séparés (38) soudés à l'intérieur du susdit conduit chaud à l'aide d'un conducteur (15) situé à l' intérieur du conduit(39)sur lequel les goutteurs (38) sont pressés radialement en changeant la hauteur du libre jeu (100)formé entre le conducteur (15) et la parois intérieure du conduit(39),à ce qu'ils soient soudés a l'intérieur du conduit (39) où ledit conducteur (15) exerce sur lesdits goutteurs (38) de la pression impulsive, périodique ou vibratoire.

2. Méthode de production d'un tuyau d'irrigation à goutteurs de section constante, selon la revendication 1, où le jeu formé entre le conducteur (15) et la parois intérieure du tuyau à goutteurs (39), durant la production du dernier, est supérieur de la hauteur du goutteur (38) permettant, ainsi, aux goutteurs de passer librement entre le conducteur et le conduit.

3. Méthode de production d'un tuyau d'irrigation à goutteurs, selon la revendication 1, où le conduit chaud est fourni d'une unité de calibrage (43) à mouvement vibratoire.

4. Méthode de production d'un tuyau d'irrigation à goutteurs, selon la revendication 1, où le conduit porte à son intérieur le mécanisme (13) servant à l'entaînement des goutteurs(38).

5. Méthode de production d'un tuyau d'irrigation à goutteurs, selon la revendication 1, où les goutteurs (38) sont pressés à la parois intérieure du conduit contre l'unité de calibrage (43).

6. Méthode de production d'un tuyau d'irrigation à goutteurs, selon la revendication 1-5, où de conducteur (15) est equippé d' une partie mobile exerçant sur les goutteurs(38) de la pression alternativement impulsive.

7. Tuyau d'irrigation à goutteurs de section transversale et variable, composé d'un conduit formé par extrusion et localement gonflé par des goutteurs (38) qui, étant soudés à son intérieur, ne dépassent pas, par leur extension, le quart de la circonférence du conduit.

FIG.1

FIG.2

FIG.3

FIG.4

FIG.5

FIG.6

FIG.7

FIG.8

FIG.9

FIG.10

FIG.14

FIG.13

FIG.16

FIG.17

FIG.15

EP 0 510 135 B1

FIG.11

FIG.12

**FIG.21**

**FIG.18**

**FIG.24**

**FIG.23**

EP 0 510 135 B1

FIG.20

FIG.22

**FIG.25**

**FIG.19**

EP 0 510 135 B1

**FIG.26**

**FIG.27**

FIG.24A

FIG.28

FIG.29

**FIG. 30**

EP 0 510 135 B1

*FIG.31*

15

39

15

38 → 40 41

**FIG.32**

15

39

15

40

38

41

**FIG.32A**

14

43

39

V1

V3

15

V2

38

15

**FIG.33**

**FIG.33A**